# EUROPÄISCHE PATENTANMELDUNG

(11) **EP 1 332 992 A2**
(43) Veröffentlichungstag der Anmeldung: **06.08.2003**
(21) Anmeldenummer: 03001731.3
(22) Anmeldetag: 27.01.2003
(51) Int. Cl.: B65G 59/08

(54) **Vorrichtung zur Zuführung von Leergutstapeln**

(30) Priorität: 26.01.2002 DE 10202959
(71) Anmelder: Fiederling, Karl, 97070 Würzburg (DE)
(72) Erfinder: Fiederling, Karl, 97070 Würzburg (DE)
(74) Vertreter: Pöhner, Wilfried Anton, Dr.

(57) **Zusammenfassung**

Beschrieben wird eine Vorrichtung zur Zuführung von Leergutstapeln (7) an weiterverarbeitende Maschinen mit einer Vorrichtung zur Aufnahme und Abgabe des Leergutstapels (7), Mitteln zur Andienung des Leergutstapels (7) und einer Förderstrecke (6) zur Abfuhr des Leerguts. Erfindungsgemäß ist vorgesehen, daß die Vorrichtung zur Aufnahme und Abgabe des Leergutstapels (7) einen Schwenkarm (1) umfaßt, welcher um eine horizontale, zur Förderrichtung der Förderstrecke (6) senkrechte Achse (5) schwenkbar ist, bei Aufnahme des Leergutstapels (7) etwa vertikal ausgerichtet und frontal vor und etwa mittig zu dem Leergutstapel (7) positioniert ist. Weiterhin sind Mittel (3) zur Festlegung des obersten und untersten Elementes des Leergutstapels (7) an dem Schwenkarm (1) vorgesehen. Gemäß Vorschlag wird nach Festlegung der genannten Elemente der Schwenkarm (1) zusammen mit dem Leergutstapel (7) in eine Position parallel zur Förderstrecke (6) verschwenkt.

## Beschreibung

Die Erfindung betrifft eine Vorrichtung zur Zuführung von Leergutstapeln, die vorzugsweise auf Paletten sitzen, an weiterverarbeitende Maschinen mit einer Vorrichtung zur Aufnahme und Abgabe des Leergutstapels, Mitteln zur Andienung des Leergutstapels und einer Förderstrecke zur Abfuhr des Leerguts, vorzugsweise einem Rollen- oder Bandförderer.

Für einen effektiven Material- und Güterfluß sind Ladehilfsmittel erforderlich, welche sowohl einen rationellen Transport als auch eine optimale Lagerung von Gütern ermöglichen. Zu den wichtigsten Ladehilfsmitteln dieser Art zählen Paletten und Stapelbehälter. Ein wesentlicher Vorteil dieser Ladehilfsmittel besteht darin, daß sie wieder verwendbar sind. Diese Eigenschaft führt allerdings auch zu einem logistischen Problem erheblicher Bedeutung, da die leeren Paletten oder Stapelbehälter an den Ort ihrer Befüllung zurückgebracht werden müssen.

Diesem Problem begegnet man einerseits dadurch, daß die Ladehilfsmittel unter den Teilnehmern der Logistikkette - Hersteller, Großhändler, Spediteur und Verbraucher - weitergereicht werden. Der jeweilige Eigentümer eines Ladehilfsmittels erhält nicht sein individuelles Ladehilfsmittel vom Empfänger der Waren zurück, sondern nur ein gleichartiges. Durch dieses Tauschverfahren erreicht man, daß die Länge des Transportweges für leere Ladehilfsmittels in vorteilhafter Weise reduziert wird.

Bei einer anderen Lösung des Problems werden kurze Transportwege dadurch realisiert, daß die Lagerstätten und Füllbetriebe dezentralisiert werden. Diese Maßnahme führt dazu, daß mit zunehmender Tendenz kleine Betriebe der genannten Art entstehen.

Beim Transport von Behältern besteht eine dritte Lösung des genannten Problems auch darin, Behälter einzusetzen, die im leeren Zustand ein geringes Transportvolumen aufweisen. Diese Forderung führte zur Entwicklung von Behältern, die nach Entleerung der Waren zusammengeklappt werden können, wie beispielsweise die bekannten Klappkästen.

Nach dem Stand der Technik wird bei der Handhabung von Leerbehältern das Aufstapeln zu einem Leergutstapel, die Zuführung von Leergutstapeln an Maschinen zur weiteren Verarbeitung der einzelnen Leergutelemente und das Abstapeln der Leergutstapel in der Regel manuell durchgeführt. Von Nachteil hierbei ist, daß diese Arbeiten sind zum einen körperlich anstrengend, zum anderen wegen der manuellen Tätigkeit sehr lohnintensiv sind.

Vor diesem Hintergrund hat sich die Erfindung die Aufgabe gestellt, eine Vorrichtung zur Zuführung von Leergutstapeln an weiterverarbeitende Maschinen zu schaffen, die das Aufnehmen und Abgeben eines Stapels aufeinander sitzender Leergutelemente mit allen dafür notwendigen Arbeitsschritten selbsttätig und kostengünstig durchführt. Die vorgeschlagene Vorrichtung ist dabei sowohl für Stapelbehälter unterschiedlichster Art als auch für Klappkästen einsetzbar.

Erfindungsgemäß wird diese Aufgabe dadurch gelöst, daß
- die Vorrichtung zur Aufnahme und Abgabe des Leergutstapels eine Schwenkarm umfaßt, welche
   - um eine horizontale, zur Förderrichtung der Förderstrecke senkrechte Achse schwenkbar ist,
   - bei Aufnahme des Leergutstapels
      - etwa vertikal ausgerichtet
      - und frontal vor
      - und etwa mittig zu dem Leergutstapel positioniert ist,
- Mittel zur Festlegung des Leergutstapels an der Schwenkarm vorgesehen sind,
- und die Schwenkarm nach Festlegung der genannten Elemente zusammen mit dem Leergutstapel in eine Position parallel zur Förderstrecke verschwenkt.

Die vorgeschlagene Vorrichtung zur Zuführung von Leergutstapeln an weiterverarbeitende Maschinen weist mehrere Komponenten auf, die ineinandergreifende Arbeitsschritte ausführen. Eine der wesentlichen Komponenten umfaßt einen Schwenkarm, der sowohl die Aufnahme des Leergutstapels als auch dessen Abgabe an eine Förderstrecke durchführt. Zur Aufnahme eines Leergutstapels wird der Schwenkarm so ausgerichtet, daß er in die vertikale Richtung weist und eine Position einnimmt, die frontal vor und etwa mittig zu dem Stapel liegt. Anschließend wird das oberste und unterste Element des Stapels mit dafür vorgesehenen Mitteln am Schwenkarm festgelegt und der Schwenkarm in eine Position verschwenkt, in welcher er auf der Förderstrecke zum Aufliegen kommt. Nach einer Freigabe des Leergutstapels werden die Leergutelemente von der Förderstrecke übernommen und weiteren Maschinen zu einer weitergehenden Verarbeitung zugeführt. Die weitere Verarbeitung kann beispielsweise eine Reinigung oder eine Wiederbefüllung der Leergutelemente mit Waren sein.

Eine wesentliche Überlegung bei vorliegender Erfindung beruht darauf, daß es für eine Verschwenkung des kompletten Leergutstapels bereits ausreichend ist, wenn dessen beide äußerste Elemente relativ zum Schwenkarm festgelegt sind. Durch diese Festlegung erhält der Stapel an sich aufgrund des gegenseitigen Eingriffs der Leergutelemente ineinander eine ausreichende Stabilität. Bei einer Verschwenkung des Schwenkarms wird somit in vorteilhafter Weise der komplette Leergutstapel mit verschwenkt. Ein weiterer Vorteil, der aus dieser Festlegung der Leergutelemente folgt, liegt darin, daß der vorgeschlagene Schwenkarm ohne Probleme für Stapel unterschiedlicher Höhe einsetzbar ist. Damit wird er der Praxis, die durch wechselnde Stapelhöhen gekennzeichnet ist, vollkommen gerecht.

Sämtliche Arbeitsabläufe beim Aufnehmen des Leergutstapels, beim Verschwenken des Schwenkarms aus der Vertikalen in die Richtung der Förderstrecke und der Abgabe des Leerguts an die Förderstrecke laufen selbsttätig ab. Durch den Einsatz der vorgeschlagenen Vorrichtung lassen sich daher in vorteilhafter Weise die bei Verfahren nach dem Stand der Technik gegebenen lohn- und zeitintensiven Arbeitsvorgänge einsparen. Darüber hinaus ist es auch als Fortschritt anzusehen, daß monotone und kräftezehrende manuelle Tätigkeiten bei der Handhabung der Leergutstapel an Maschinen übertragen werden. Die vorgeschlagene Vorrichtung läßt sich zudem mit Vorteil sowohl für Leergutbehälter als auch Klappbehälter einsetzen.

Zur Festlegung des Leergutstapels wurden bislang am obersten und untersten Element angreifende Mittel beschrieben. Als Alternative und ausdrücklich vom Schutz umfaßt sind jene Ausbildungen, bei denen die Mittel zur Festlegung des Leergutstapels in horizontaler Richtung an einer einzelnen Kiste angreifen. Dies hat zum Vorteil, dass der entsprechende Schwenkarm nieder baubar ist und zu dem bei unterschiedlichen Stapelhöhen ein leichteres Arbeiten zu läßt. Dies gilt insbesondere dann, wenn die Mittel zur Festlegung am unteren Ende des Leergutstapel angreifen. Ein weiterer Vorteil wird dann erkennbar, wenn wie später eingehende beschrieben, zwei parallel zueinander angeordnete Stapel gleichzeitig und gemeinsam bearbeitet werden, d.h. dass der Schwenkarm bei einem einzigen Arbeitstakt zwei Leergutstapel bewegt, woraus sich nicht nur eine Verdopplung der Kapazität ergibt sondern auch den Vorzug, dass auf einer Palette jeweils zwei Stapel nebeneinander angeordnet werden können, die direkt unmittelbar von der Palette herunternehmbar sind.

Bei einer bevorzugten Ausführungsform sehen die Mittel zur Festlegung des obersten Leergutelementes einen in Längsrichtung des Schwenkarms verschiebbaren oberen Anschlag vor. Der Schwenkarm ist zu diesem Zweck im Bereich des genannten Anschlags mit Führungen ausgestattet, die den oberen Anschlag aufnehmen. Die Mittel zur Festlegung des untersten Leergutelementes umfassen gemäß einem Merkmal der Erfindung ebenfalls einen Anschlag. Dieser ist im Unterschied zum oberen Anschlag jedoch sowohl in Längssrichtung des Schwenkarms als auch in Richtung von dessen Schwenkachse verschiebbar ausgebildet. Alternativ zur Verschiebung in Richtung der Schwenkachse wird gemäß vorliegender Erfindung auch vorgeschlagen, den genannten Anschlag um eine zur Längsachse des Schwenkarms parallele Achse verschwenkbar auszuführen.

Bei vorliegender Ausführungsform mit einem oberen und unteren Anschlag sind zur Aufnahme eines Leergutstapels folgende Arbeitsschritte vorgesehen:

Die Aufnahme des Leergutstapels wird dadurch eingeleitet, daß der obere Anschlag gegen das oberste Element des Leergutstapels gefahren wird. Zur Festlegung des untersten Elementes wird der Schwenkarm in einem anschließenden Arbeitsschritt unter Beibehaltung der Arretierung des obersten Elementes geringfügig gegen die Vertikale verschwenkt. Vorgeschlagen wird hierbei ein Verschwenkwinkel von maximal etwa 20 Grad. Dieser Vorgang führt dazu, daß sich der komplette Stapel von Leergutbehältern in dieselbe Richtung und um den selben Winkelbetrag wie der Schwenkarm neigt. Die Festlegung des untersten Elementes erfolgt dann dadurch, daß der untere Anschlag von der Seite her unter den Boden des leicht gekippten untersten Behälters gefahren wird. In einer Position, die etwa mittig zum Behälterboden liegt, fährt der untere Anschlag in einem weiteren Arbeitsschritt geringfügig in Richtung oberer Anschlag und klemmt dadurch den kompletten Stapel an Leergutbehältern zwischen dessen obersten und untersten Element ein. Der Leergutstapel erhält hierdurch ausreichende Stabilität, um in dem daran anschließenden Vorgang zusammen mit dem Schwenkarm verschwenkt zu werden.

In der alternativen Arbeitsweise mit horizontal angreifenden Mittel zur Festlegung erfolgt nach seitlichem Kraftschluss mit den Kisten eine Kippbewegung des gesamten Stapels um deren in Transportrichtung gesehen vordere Querkante. Dass hierbei angestrebte Ziel ist, dass der Stapel als ganzes in stabilem Zustand die Kippbewegung vollführt und nicht in einer gewissen Höhe in zwei oder mehreren Abschnitten auseinander kippt. Bei einem Angriff der Festlegungsmittel im unteren Bereich des Stapels ist diese Bedingung erfüllt. Wird durch geeignete Meßmittel wie z.B. eine Fotozelle festgestellt, dass sich der Stapel von der Auflage abgehoben hat, wird die Bewegung eines Armes ausgelöst, die von unten her am Stapel anliegt und das Anheben und Verkippen desselben sichert.

Die Verschiebung der vertikal und/oder horizontal beweglichen Mittel zur Festlegung wird durch je einen Linearantrieb vorgenommen. Eine mögliche Ausführungsform sieht beispielsweise einen Gewindetrieb vor. Im Rahmen vorliegender Erfindung wird insbesondere jedoch empfohlen, zur Verschiebung jeweils einen Hydraulikzylinder vorzusehen. Diese Ausführung ermöglicht in vorteilhafter Weise, den Anpreßdruck dem jeweiligen Leergutmaterial anzupassen. Die Vorrichtung gemäß vorliegender Erfindung ist daher in gleicher Weise für empfindliche Leergutbehälter wie Steigen mit durchbrochenen Seitenwänden, als auch für massive Kisten aus Holz oder Stahl einsetzbar.

Nach einer Verschwenkung des Schwenkarms in eine zur Förderstrecke parallelen Position erfolgt die Abgabe des Leerguts an die Förderstrekke. Der Schwenkarm ist hierzu gemäß vorliegender Erfindung mit wenigstens einem, vorzugsweise zwei Halteflügeln ausgestattet, an denen die Elemente des Leergutstapels in der Abgabeposition des Schwenkarms anliegen. Die Abgabe der Leergutelemente an die Förderstrecke erfolgt dann dadurch, daß die Halteflügel sich öffnen und der Leergutstapel sich infolge der Schwerkraft auf die unter ihm befindliche Förderstrecke ablegt. Die Öffnung der Halteflügel erfolgt dabei je nach Ausführung entweder durch eine Verschiebung der Flügel in seitliche Richtung oder durch ein Verschwenken in eine Position, in der die lichte Weite zwischen den Flügeln den Außenmaßen der Leergutbehälter entspricht. Vorliegende Ausführungsform mit Halteflügeln hat den Vorteil, daß die Übergabe der Leergutbehälter an die Förderstrecke mit einfachsten Mitteln und selbsttätig allein aufgrund des Eigengewichtes der Leergutbehälter erfolgt.

Die abgelegten Leergutelemente werden mittels der Förderstrecke weiterverarbeitenden Maschinen zugeführt, beispielsweise einer Maschine zur Reinigung der Behälter oder einer zur Befüllung mit Waren. Die weiterverarbeitenden Maschinen sind jedoch nicht Gegenstand vorliegender Erfindung.

Eine weitere wesentliche Komponente der vorliegenden Vorrichtung betrifft Mittel zur Andienung des Leergutstapels an den Schwenkarm. Gemäß einem Merkmal der Erfindung umfassen diese Mittel eine Stange, die parallel zur Schwenkachse des Schwenkarms ausgerichtet ist. Die Stange ist mittels eines Antriebes in Richtung senkrecht zur genannten Schwenkachse, d.h. in Richtung auf den Schwenkarm zu, verschiebbar ausgebildet. Die Verschiebung erfolgt dabei so, daß die Stange eine zu sich selbst parallele Ausrichtung beibehält. Die Leergutstapel sind im Bereich zwischen Stange und Schwenkarm abgestellt, beim Verschieben der Stange werden sie daher von der Stange erfaßt und an den Schwenkarm herangeführt. Als Antrieb zur Verschiebung der Stange wird empfohlen, einen Kettenantrieb einzusetzen, da dieser problemlos eine weiträumige Verschiebung der Stapel ermöglicht. Die vorgeschlagenen Mittel zur Andienung der Stapel an den Schwenkarm zeichnen sich insbesondere durch einfache konstruktive Maßnahmen und dementsprechend eine sichere Funktionsweise aus.

Für eine sichere Andienung der Stapel ist die Höhe der Stange über Boden von entscheidender Bedeutung. Sie richtet sich nach der Art des Ladehilfsmittels, auf welchem die Leergutstapel angeliefert werden, und nach der Höhe der einzelnen Leergutelemente. Erfindungsgemäß ist daher vorgesehen, daß die Stange entweder etwa in halber Höhe des untersten Elementes des Leergutstapels oder etwa in halber Höhe des unter dem Leergutstapel eingesetzten Ladehilfsmittels angebracht ist.

Der erste Fall findet Anwendung, wenn die Leergutelemente entweder auf dem Boden abgestellt sind (Variante 1), oder die Leergutstapel auf Paletten bereitgestellt sind, deren Plattformen bündig aneinander anschließen (Variante 2). Die Andienung der Stapel zum Schwenkarm sieht dann eine Verschiebung der Stapel relativ zu deren Untergrund vor, d. h. die Stapel werden bei Variante 1 auf dem Boden verschoben, bei Variante 2 von Plattform zu Plattform der Paletten. Bei diesem Anwendungsfall erfüllt die Stange in vorteilhafter Weise gleichzeitig die Aufgabe, die ihr zugewandte Seitenfläche eines jeden Stapels parallel zu sich und damit parallel zur Verschwenkachse des Schwenkarms auszurichten.

In den Fällen, in denen die Ausbildung der Leergutelemente nicht erlaubt, diese Elemente auf deren Bodenfläche zu verschieben, sieht die Erfindung vor, die Leeergutstapel samt der unter dem Stapel eingesetzten Ladehilfsmittel zu verschieben. Die Höhe der Stange über Boden ist in diesem Fall so vorgegeben, daß sie etwa in halber Höhe des Ladehilfsmittels ansetzt.

In der Regel erfolgt die Anlieferung der Leergutstapel auf Euro-Paletten, da deren Maße und die der Leergutbehälter genormt und aufeinander abgestimmt sind. Die angelieferten Paletten werden im Andienungsbereich der erfindungsgemäßen Vorrichtung bereitgestellt. Der genannte Bereich ist dabei üblicherweise so ausgelegt, daß er für die Aufnahme mehrerer Paletten geeignet ist. Erfindungsgemäß ist für diesen Fall vorgesehen, daß die Länge der Stange größer als das Vielfache des Längen- oder Breitenmaßes einer Palette ist.

In der Mehrzahl der Fälle finden auf der Grundfläche einer Europalette 2x2 Leergutelemente Platz. Bei N nebeneinander stehenden Paletten werden somit 4xN Leergutstapel von der Stange erfaßt und in Richtung Schwenkarm verschoben. Diesem Anwendungsfall wird die Erfindung durch eine bevorzugte Ausführungsform der vorliegenden Vorrichtung gerecht, bei welcher der Schwenkarm und/oder die Förderstrecke in Richtung der Schwenkachse parallelverschiebbar sind. Die vorgeschlagene Ausbildung führt dazu, daß der Schwenkarm beider Aufnahme von Stapeln jeweils von einem zum nächsten der in einer Reihe bereitstehenden Leergutstapel verfahren werden kann. Nach Ausrichtung des Schwenkarms in eine zum aufzunehmenden Stapel mittige Position erfolgt die Aufnahme des jeweiligen Stapels dann in der oben beschriebenen Weise. Vorliegende Ausführungsform ist für einen großen Durchsatz ausgelegt und dementsprechend in größeren Anlagen mit Vorteil einzusetzen.

Bei einer Weiterbildung der erfindungsgemäßen Vorrichtung zur Zuführung von Leergutstapeln ist eine Einstellvorrichtung zur Einstellung der Höhe der Förderstrecke und/oder der Neigung der Förderstrecke relativ zum Schwenkarm und /oder des Abstandes zwischen Förderstrecke und Schwenkarm vorgesehen. Diese Einstellmöglichkeiten erlauben, die Vorrichtung gemäß der Erfindung an unterschiedliche Leergutmaße und unterschiedliche räumliche Gegebenheiten anzupassen. Besonders bevorzugt ist, eine Absenkung der Förderstrecke in Transportrichtung vorzunehmen, da dann die jeweils vordere Kiste etwas nach vorne wegkippt, was zur Vereinzelung der Kisten in entscheidender Weise beiträgt.

Die dargelegten Arbeitsschritte beim Andienen, Aufnehmen und Abgeben der Leergutstapel erfolgen bei vorliegender Erfindung weitestgehend selbsttätig. Zur Steuerung der Abläufe in diesem Sinn sind daher Sensoren, Signalgeber und eine Steuereinheit vorgesehen. Gemäß einem Merkmal der Erfindung ist vorliegende Vorrichtung insbesondere mit einem Signalgeber, vorzugsweise eine Lichtschranke, ausgestattet, der beim Heranführen des Leergutstapels an den Schwenkarm bei einer definierten Position des Leergutstapel ein Steuersignal erzeugt. Dieses Signal kennzeichnet den für die Aufnahme der Leergutstapel geeigneten Abstand zwischen Schwenkarm und Stapel und führt dementsprechend zur Einleitung des Aufnahmevorgangs durch den Schwenkarm.

Die Konzeption vorliegender Vorrichtung ist ausgerichtet auf die Verwendung von stapelbaren Leergutelementen. Sie ist daher einsetzbar für alle derartigen Elemente unterschiedlicher Ausprägung. Gemäß einem Merkmal der Erfindung ist insbesondere vorgesehen, daß diese Elemente stapelbare Behälter sind, wie beispielsweise Obst- oder Gemüsesteigen, Klappsteigen, Flaschenkästen, oder Transportbehälter für Milch, Brot oder Brötchen.

Wie bereits erwähnt, ist ausdrücklich vorgesehen, dass der Leergutstapel aus zwei oder mehr nebeneinander angeordneten Behälter, die in vertikaler Richtung durch weitere Behälter ergänzt sind, bestehen kann, also insbesondere einen Doppelstapel bildet. Bei Paletten mit mehreren nebeneinander angeordneten einzelnen Steigen oder Kisten erweist sich eine derartige Anordnung als überlegen. Die Behandlung und das Absetzen auf dem Schwenkarm erfolgt für alle nebeneinander befindlichen Behälter oder Steigen synchron; lediglich das Ablegen auf Förderstrecke erfolgt sukzessive in dem Sinne, dass zunächst der erste Stapel abgelegt und erst nach dessen Abarbeiten der daneben befindliche zweite Stapel (und ggf. weitere) auf der Förderstrecke abgelegt werden.

Weitere Einzelheiten, Merkmale und Vorteile der Erfindung lassen sich dem nachfolgenden Teil der Beschreibung entnehmen. In diesem Teil wird eine Ausführungsbeispiel der erfindungsgemäßen Vorrichtung anhand einer schematischen Zeichnungen näher erläutert.

Es zeigen
- Figur 1:: Seitenansicht des Schwenkarms in zwei verschiedenen Stellungen
- Figur 2:: Frontansicht des Schwenkarms
- Figur 3:: Aufsicht auf den Schwenkarm und die Andienungszone

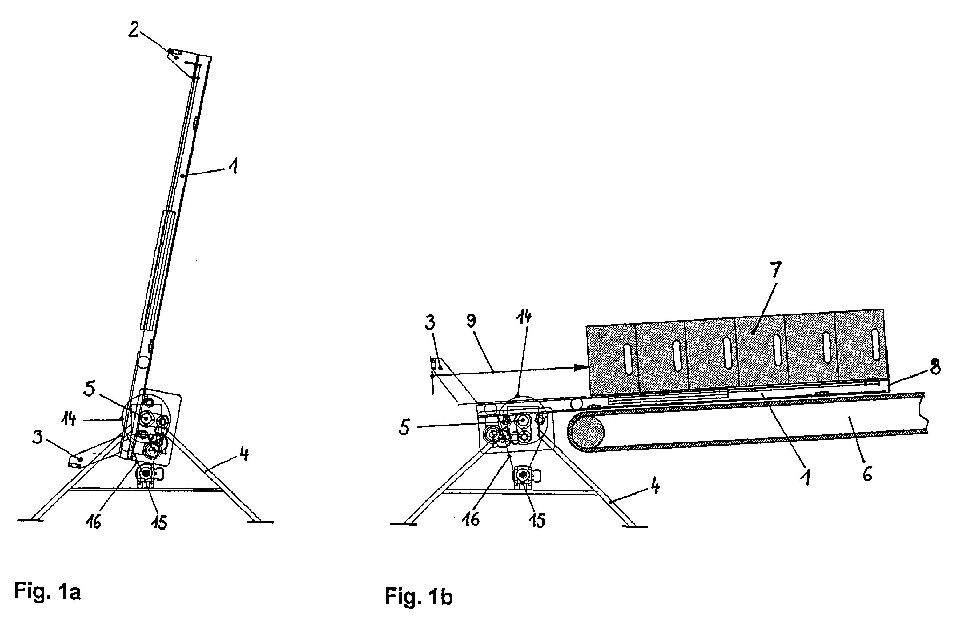

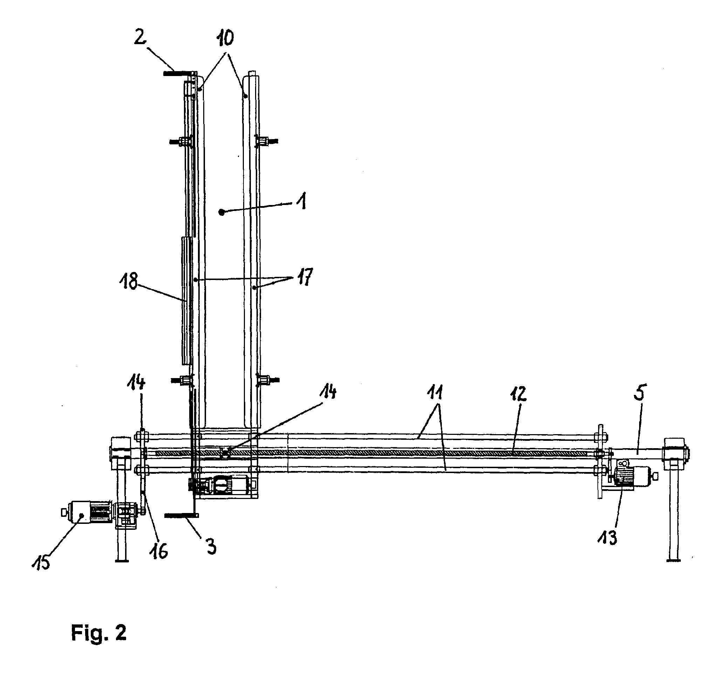

In der Seitenansicht nach Figur 1a ist der Schwenkarm 1, der obere Anschlag 2 und der untere Anschlag 3 zu erkennen. Das Gestell 4 dient zur Halterung des Schwenkarms 1 und ist mit einer Achse 5 ausgerüstet, um welche der Schwenkarm verschwenkbar ausgebildet ist. Die dargestellte Position gibt die Ruheposition des Schwenkarms 1 wieder. In dieser Position befinden sich beide Anschläge 2, 3 in ihren Endpositionen. Nach Aufnahme eines Leergutstapels verschwenkt der Schwenkarm in eine zur Förderstrecke 6 parallele Position gemäß Figur 1 b. Der dargestellte Augenblick gibt den Schwenkarm 1 in abgabebereitem Zustand wieder. Der Leergutstapel 7 wurde daher mittels des unteren Anschlages 3 aus der Position, die er nach der Aufnahme relativ zum Schwenkarm eingenommen hatte, in Richtung zum oberen Ende 8 des Schwenkarms 1 verschoben. Der Pfeil 9 soll diesen Verschiebevorgang, der vor dem dargestellten Zeitpunkt stattgefunden hat, andeuten. Nach Öffnen der Halteflügel 10, die in Figur 2 zu erkennen sind, legt sich der Leergutstapel 7 aufgrund der Schwerkraft auf der Förderstrecke 6 ab und wird der weiteren Verarbeitung zugeführt.

Der Figur 2 sind die Mittel zur Verschiebung und Verschwenkung des Schwenkarms 1 zu entnehmen. Die Verschiebung wird mittels eines Linearantriebs durchgeführt, der in vorliegender Ausführung im wesentlichen aus den Führungsschienen 11, einer Gewindespindel 12 und einem Motor 13 besteht. Bei laufendem Motor wird die Gewindespindel in Drehung versetzt und bewirkt eine Verschiebung der Gewindemutter 14 und des an der Mutter festgelegten Schwenkarms 1. Der Schwenkarm 1 kann auf diese Weise über die volle Länge der Führungsschienen 11 verfahren werden und dementsprechend Leergutstapel aufnehmen, die innerhalb dieses Verfahrbereichs bereitgestellt sind.

Zur Verschwenkung des Schwenkarms ist der Arm drehfest mit einer Riemenscheibe 14 verbunden, über die ein vom Motor 15 angetriebener Keilriemen 16 läuft. Die Details zu diesem Antrieb sind in den Figuren 1a und 1b zu erkennen.

Wie der Figur 2 zu entnehmen ist, weist der Schwenkarm 1 zwei Schienen 17 auf, an denen die Halteflügel 10 angebracht sind. Auf diesen Flügeln kommen nach der Aufnahme eines Leergutstapels 7 die vertikalen Kanten der Leergutbehälter zu liegen. Ebenfalls auf Figur 2 zu erkennen ist der obere Anschlag 2 und der untere Anschlag 3. Bei vorliegender Ausführung wird die Verschiebung dieser Anschläge in Längsrichtung des Schwenkarms 1 durch Hydraulikzylinder 18 vorgenommen.

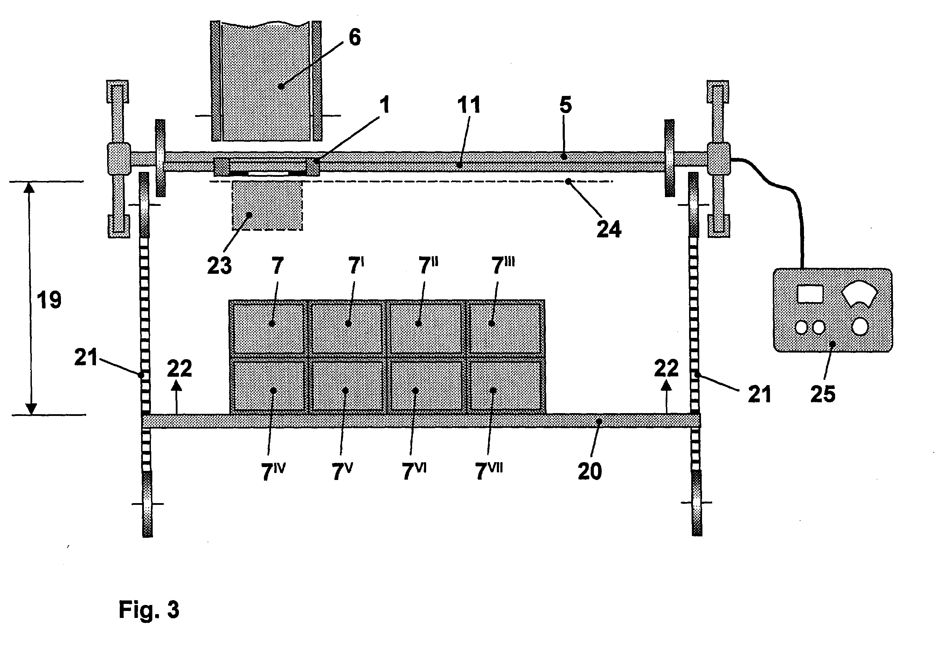

In der Darstellung nach Figur 3 ist der Andienungsbereich 19 vor dem Schwenkarm 1 wiedergegeben. Wesentliches Element dieses Bereiches ist eine Stange 20, die parallel zur Schwenkachse 5 des Schwenkarms 1 ausgerichtet ist und sich über die volle Länge der Führungsschienen 11 erstreckt. Als Antrieb der Stange ist ein Kettenantrieb vorgesehen, der unter dem Bezugszeichen 21 angedeutet ist.

Zur Andienung der Leergutstapel 7, 7', 7" etc. an den Schwenkarm 1 wird die Stange 20, wie durch die Pfeile 22 angedeutet, in Richtung auf den Schwenkarm 1 zu verschoben. Bei diesem Vorgang werden die im Bereich 19 zwischen Stange 20 und Schwenkarm 1 abgestellten Leergutstapel 7 - 7^{VII} erfaßt und an den Schwenkarm 1 heran geführt. Dabei werden Leergutstapel, deren Seitenflächen vor der Erfassung nicht parallel zur Verschwenkachse 5 liegen, automatisch in dieser Richtung ausgerichtet. Die Verschiebung der Stapel kommt zum Stillstand, wenn die dem Schwenkarm zugewandte vorderste Reihe der Leergutstapel 7 - 7"' die zur Aufnahme geeignete Position erreicht hat. In Figur 3 ist diese Position durch den Leergutstapel mit Bezugszeichen 23 gekennzeichnet. Die Beendigung des Verschiebevorgangs wird durch eine Lichtschranke ausgelöst, welche durch die Linie 24 angedeutet ist. Die von der Lichtschranke erzeugten Signale führen darüber hinaus auch zur Einleitung des Aufnahmevorgangs durch den Schwenkarm 1.

Die einzelnen Arbeitsschritte beim Andienen, Aufnehmen und Abgeben der Leergutstapel erfolgen bei vorliegender Vorrichtung weitestgehend selbsttätig. Durch den Einsatz der vorgeschlagenen Vorrichtung lassen sich daher die bei Verfahren nach dem Stand der Technik gegebenen lohn- und zeitintensiven Arbeitsvorgänge einsparen. Die Kontrolle und Steuerung der Abläufe bei vorliegender Vorrichtung erfolgt mittels der Steuereinheit 25.

## Patentansprüche

1. Vorrichtung zur Zuführung von Leergutstapeln, die vorzugsweise auf Paletten sitzen, an weiterverarbeitende Maschinen mit einer Vorrichtung zur Aufnahme und Abgabe des Leergutstapels, Mitteln zur Andienung des Leergutstapels und einer Förderstrecke zur Abfuhr des Leerguts, vorzugsweise einem Rollen- oder Bandförderer, **dadurch gekennzeichnet, daß**
- die Vorrichtung zur Aufnahme und Abgabe des Leergutstapels einen Schwenkarm (1) umfaßt, welcher
- um eine horizontale, zur Förderrichtung der Förderstrecke senkrechte Achse (5) schwenkbar ist,
- bei Aufnahme des Leergutstapels (7)
- etwa vertikal ausgerichtet
- und frontal vor
- und etwa mittig zu dem Leergutstapel positioniert ist,
- Mittel (2, 3) zur Festlegung des Leergutstapels (7) am Schwenkarm (1) vorgesehen sind,
- und der Schwenkarm (1) nach Festlegung der genannten Elemente zusammen mit dem Leergutstapel (7) in eine Position parallel zur Förderstrecke (6) verschwenkt.

2. Vorrichtung zur Zuführung von Leergutstapeln nach Anspruch 1, **dadurch gekennzeichnet, daß** die Mittel zur Festlegung des Leergutstapels (7) an obersten und untersten Elementen und/oder in horizontaler Richtung, vorzugsweise im Bereich des unteren Endes des Leergutstapels (7), angreifen.

3. Vorrichtung zur Zuführung von Leergutstapeln nach Anspruch 1 oder 2, **dadurch gekennzeichnet, daß**
- die Mittel zur Festlegung des genannten obersten Elementes einen in Längsrichtung des Schwenkarms (1) verschiebbaren oberen Anschlag (2) umfassen.

4. Vorrichtung zur Zuführung von Leergutstapeln nach einen der vorhergehenden Ansprüche, **dadurch gekennzeichnet, daß**
- nach Festlegung des obersten Elements sich der Schwenkarm (1) zusammen mit dem Leergutstapel (7) um einen geringen Winkel, vorzugsweise etwa 20Grad gegen die Vertikale, neigt,
- die Festlegung des genannten untersten Elementes in dieser Position des Schwenkarms (1) und mittels eines unteren Anschlages (3) erfolgt,
- der in Längsrichtung des Schwenkarms (1) verschiebbar ausgebildet ist
- und entweder in Richtung der Schwenkachse (5) verschiebbar
- oder um eine zur Längsrichtung des Schwenkarms (1) parallele Achse verschwenkbar ausgebildet ist.

5. Vorrichtung zur Zuführung von Leergutstapeln nach einen der vorhergehenden Ansprüche, **dadurch gekennzeichnet, daß** der Leergutstapel (7) um die in Transportrichtung vorderer Querkante des Stapels (7) gekippt und anschließend von einem Arm untergriffen wird.

6. Vorrichtung zur Zuführung von Leergutstapeln nach einem der vorhergehenden Ansprüche, **dadurch gekennzeichnet, daß**
- die Verschiebung der Mittel zur Festlegung jeweils mittels eines Hydraulikzylinders (18) erfolgt.

7. Vorrichtung zur Zuführung von Leergutstapeln nach einem der vorhergehenden Ansprüche, **dadurch gekennzeichnet, daß**
- der Schwenkarm (1) mit wenigstens einem, vorzugsweise zwei Halteflügeln (10) ausgestattet ist,
- die Elemente des Leergutstapels (7) in der zur Förderstrecke (6) parallelen Richtung des Schwenkarms (1) an genanntem Halteflügel/genannten Halteflügeln (10) anliegen
- und die Abgabe der Elemente des Leergutstapels (7) an die Förderstrecke (6) durch Öffnen des/der Halteflügel (10) erfolgt.

8. Vorrichtung zur Zuführung von Leergutstapeln nach einem der vorhergehenden Ansprüche, **dadurch gekennzeichnet, daß**
- die Mittel zur Andienung des Leergutstapel eine Stange (20) aufweisen,
- die parallel zur Schwenkachse (5) des Schwenkarms (1) ausgerichtet
- und mittels eines Antriebes (21) in Richtung senkrecht zur genannten Schwenkachse (5) parallel zu sich selbst verschiebbar ist,
- und der Leergutstapel (7, 7', etc.) durch Verschieben der Stange (20) an den Schwenkarm (1) heranführbar ist.

9. Vorrichtung zur Zuführung von Leergutstapeln nach Anspruch 8, **dadurch gekennzeichnet, daß**
- der genannte Antrieb ein Kettenantrieb (21) ist.

10. Vorrichtung zur Zuführung von Leergutstapeln nach Anspruch 8 oder 9, **dadurch gekennzeichnet, daß**
- die Stange (20)
- entweder etwa in halber Höhe des untersten Elementes des Leergutstapels (7)
- oder etwa in halber Höhe des unter dem Leergutstapel (7) eingesetzten Ladehilfsmittels angebracht ist.

11. Vorrichtung zur Zuführung von Leergutstapeln nach einem der Ansprüche 8 - 10, **dadurch gekennzeichnet, daß**
- die Länge der Stange (20) größer als das Vielfache des Längenoder Breitenmaßes einer Palette ist.

12. Vorrichtung zur Zuführung von Leergutstapeln nach einem der vorhergehenden Ansprüche, **dadurch gekennzeichnet, daß**
- der Schwenkarm (1)
- und/oder die Förderstrecke (6)
in Richtung der Schwenkachse (5) parallelverschiebbar sind.

13. Vorrichtung zur Zuführung von Leergutstapeln nach einem der vorhergehenden Ansprüche, **dadurch gekennzeichnet, daß**
- eine Einstellvorrichtung
- zur Einstellung der Höhe der Förderstrecke (6)
- und/oder der Neigung der Förderstrecke (6) relativ zum Schwenkarm (1), vorzugsweise eine Absenkung der Förderstrecke (6) in Transportrichtung,
- und /oder des Abstandes zwischen Förderstrecke (6) und Schwenkarm (1)
vorgesehen ist.

14. Vorrichtung zur Zuführung von Leergutstapeln nach einem der vorhergehenden Ansprüche, **dadurch gekennzeichnet, daß**
- ein Signalgeber, vorzugsweise eine Lichtschranke (24), vorgesehen ist,
- der beim Heranführen des Leergutstapels (7, 7', etc.) an den Schwenkarm (1) bei einer definierten Position des Leergutstapels (23) ein Steuersignal erzeugt.

15. Vorrichtung zur Zuführung von Leergutstapeln nach Anspruch 1, **dadurch gekennzeichnet, daß**
- eine Einheit zur Steuerung (25) der einzelnen Vorgänge der Vorrichtung vorgesehen ist.

16. Vorrichtung zur Zuführung von Leergutstapeln nach einem der Ansprüche 1 - 10, **dadurch gekennzeichnet, daß**
- die Elemente des Leergutstapels (7) stapelbare Behälter sind, beispielsweise
- Obst- oder Gemüsesteigen,
- Klappsteigen,
- Flaschenkästen,
- Transportbehälter für Milch, Brot, Brötchen,
- oder dergl.
sind.

17. Vorrichtung zur Zuführung von Leergutstapeln nach einen der vorhergehenden Ansprüche, **dadurch gekennzeichnet, daß** zwei oder mehr nebeneinander angeordnete Behälter den Leergutstapel (7) bilden.
